# EUROPEAN PATENT SPECIFICATION

(11) **EP 0 848 439 B1**
(45) Date of publication and mention of the grant of the patent: **25.01.2006**
(21) Application number: 97120749.3
(22) Date of filing: 26.11.1997
(51) Int. Cl.: H01M 4/52

(54) **An active material for a cathode of a nickel cell, a production method thereof, and a production method of a cathode of a nickel cell**
Aktives Kathodenmaterial für Nickelzelle, Herstellungsverfahren und Verfahren zur Herstellung von einer Kathode für Nickelzelle
Matériau actif cathodique d'une pile au nickel, son procédé de fabrication, et procédé de fabrication, et procédé de fabrication d'une cathode pour pile au nickel

(30) Priority: 13.12.1996 KR 9665362
(43) Date of publication of application: 17.06.1998
(73) Proprietor: Samsung Display Devices Co., Ltd., Suwon-Si, Kyunggi-Do (KR)
(72) Inventor: Kim, Geun-bae, Suwon-si, Kyungki-do (KR); Lee, Sang-won, Suwon-si, Kyungki-do (KR); Park, Yong-Chul, Suwon-si, Kyungki-do (KR); Kim, Sung-soo, Suwon-si, Kyungki-do (KR)
(74) Representative: Modiano, Micaela Nadia

(56) References cited:
- EP-A- 0 092 656
- EP-A- 0 390 677
- EP-A- 0 646 546
- EP-A- 0 714 144
- EP-A- 0 848 438
- DE-A- 19 635 247

## Description

### BACKGROUND OF THE INVENTION

### 1. Field of the Invention

The present invention relates to an active material for a cathode of a nickel cell, a production method thereof, and a production method of a cathode of a nickel cell, and particularly, provides an active material for a cathode of a nickel cell, a production method thereof, and a production method of a cathode of a nickel cell for making it possible to produce a cell having a high capacity.

### 2. Description of the Related arts

Recently, downsizing and lightening of new portable electronic machines such as camera-VTR integrated systems, audio systems, lap-top personal computers, portable phones and the like have made it necessary to improve the efficiency and capacity of a cell. In particular, trying to lower a production cost of the cell proceeds now in economical aspects.

In general, cells are classified as primary or secondary depending on their capability of being electrically recharged. A primary cell, such as a manganese battery, an alkaline battery, a mercury battery, and a silver oxide battery are not easily recharged electrically and hence are discharged once and discarded. A secondary cell, such as a lead storage battery, a nickel-metal hydride battery using metal hydride as an active material for a cathode, a closed nickel-cadmium battery, a lithium-metal battery, a lithium-ion battery, a lithium-polymer battery can be recharged electrically, after discharged , to their original condition. In addition to the batteries, a fuel battery and a solar battery are developed.

The disadvantages of a primary cell are low capacity, short lifetime, and contributing to environmental pollution by the disposal of non-reusable cells. On the other hand, the advantages of a secondary cell are higher efficiency, longer lifetime, a relatively higher voltage than a primary cell, and reusability thereby contributing less waste to the environment.

Among the secondary cells described above, a nickel cell is desirable in environmental aspects because of the most developed recycling technology and it increases the capacity of an electrode plate by means of increasing the packing amount per volume by packing active material paste in a multi-porous and alkali-resistant plate to provide a cell having a high capacity, and it is broadly used now.

Currently, nickel hydroxide is used as an active material for a cathode in a nickel cell and the reaction is as follows.

β-Ni(OH)₂↔β-NiOOH

The oxidation number of nickel changes by one while the reversible reaction , and therefore theoretical capacity of nickel hydroxide is 289mAh/g.

But the oxidation number of nickel changes from +2.3 to +3.0~+3.7 in real reaction and it is possible that the capacity varies from 200~380mAh/g, that is, 70~130% of the theoretical value.

In spite of above-described possibility, a high oxidation number of nickel causes decrease of a cell's and an electrode's lifetime, severe self-discharging, and low reversibility of reaction, and therefore the available capacity is known as 250~280mAh/g.

In a cathode of a nickel cell, the major reason for electrode inferiority is electrode's swelling that is, electrode's volume expansion that occurs during the transition to γ form having a larger lattice size for hydrogen ions' transfer, that is to say, β-NiOOH changes to γ-NiOOH having a low density by overdischarging β form having a higher density than α form. The electrode's swelling causes the loss of an active material, the decrease of conductivity, and severe decrease of an electrode's cycle life and efficiency.

The reason why the low density γ-NiOOH is formed is because a compact crystalline structure of a high density nickel hydroxide, that is, hydrogen ions cannot move efficiently in the reaction due to the small number of internal micropores. Therefore, it is desirable to prevent the formation of a low density γ-NiOOH to improve properties of an electrode.

To suppress the β→γ form transition, a new material, nickel-metal hydroxycarbonate is used that atoms such as cobalt, cadmium, zinc etc. are added to nickel hydroxide and these atoms substitute a part of nickel and therefore it sustains stable α form in strong alkaline solution. The method causes lattice deformation by atomic substitution and therefore can suppress the formation of γ-NiOOH as hydrogen ions move efficiently and overvoltage decreases in the charging-discharging cycle.

In addition to the method, a method to improve conductivity of an active material is broadly used that elevates the availability of an active material by using cobalt oxide forming efficient conductive matrix in strong alkaline solution.

But the two methods have limits on increasing the capacity due to the fixation of an active material and a charging-discharging reaction device and therefore it is essential to change an active material itself to increase the capacity efficiently. Recently, an active material having a new structure-the active material has a high density and a globular shape-were developed by means that the content of trivalent metallic atoms, like cobalt and ferrous, is controlled. That is to say, the materials use a reversible reaction, α-Ni(OH)₂↔γ-NiOOH, that has relatively small density differences for the charging-discharging cycle and more electrons transfer because of a large change of nickel's oxidation states during the reaction and therefore the method has high capacity theoretically, and prevents swelling of an electrode and thereby prolongs cycle life of the electrode.

But the tapping density of the powder used now is 1.4g/cm³ or less , it is tubular-shape, not globular-shape, control of the particle size's distribution is difficult. As for the crystallization degree, the half-band width of (001) plane is 0.5 or more, so it has an amorphous-phase property. Therefore, it is difficult that the material is made to have a high density and a globular-shape and that the electrode is made to have a high density and consequently, the capacity of the cell increase unsatisfactorily. It is difficult to obtain the best properties of the produced powder and theoretical value, ~375mAh/g or 130% of theoretical capacity of nickel hydroxide cannot be obtained.

The results are due to non-establishment of the charging-discharging characteristics and therefore an increase of a cell's capacity has limits without establishment of the charging-discharging characteristics.

### SUMMARY OF THE INVENTION

In order to solve the problems as described above, an object of this invention is to provide an active material for a cathode of a nickel cell, a production method thereof, and a production method of a cathode of a nickel cell, wherein properties like shape, particle size, density and specific surface area of nickel-metal hydroxycarbonate powder as the active material are controlled and thereby in overcharging of a cathode, swelling of the electrode is prevented and the efficiency of a charging-discharging cycle is improved and thereby a cell having a high capacity can be produced.

The present invention provides an active material for a cathode of a nickel cell, nickel-metal hydroxycarbonate powder having the formula, Ni₁₋₂ₓM₂ₓ(OH)₂(CO₃)ₓ(0<x<0.05), wherein M is a trivalent metal, the average diameter of the active material is 8-20 µm, tapping density thereof is more than 1.6g/cm³, lattice constant of C axis thereof is 4-6 Å, lattice constant of A axis thereof is 2.5∼2.7 Å, the shape thereof is globular. The active material having a β form before a charging or discharging reaction, β → α form transition occurs during the charging or discharging reaction, thereby α ↔ γ form transition (that is, α *→* γ form transition during charging reaction and γ → α form transition during discharging reaction) occurs and therefore discharging capacity of the cell increases.

In above-described active material, M is selected from the group consisting of Al, Co, Fe, Ga, Mn, In and the mixtures thereof.

The present invention also provides a method for producing the active material according to claim 3.

The present invention also provides the method for producing a cathode of a nickel cell which comprises the steps of producing paste by mixing the active material described above, a viscosity-increasing agent, and a conductive agent, laminating the paste on a metallic supporter, and drying and pressing the metallic supporter.

In above-described method, the conductive agent is selected from the group consisting of Co, CoO, and Co(OH)₂and the content thereof is 5∼18% by weight of the total weight of the active material.

As described above, in the active material with the method presented in this invention, the availability of the active material increases by a maximum of 20%, so that capacity of the cell increases from 289mAh/g to 350mAh/g. Also, in the charging-discharging characteristics, high-rate charging is possible as capacity is relatively invariable in 1C charging reaction compared with in 0.2C charging reaction. And in cycle life, when the electrode plate experiment is performed, capacity is effective even after 100 cycles of charging-discharging reactions compared with more or less than 50 cycles of charging-discharging reactions in the case of using the prior nickel hydroxide and therefore the cycle life improves by more than 2 times. In addition, if the cell is produced using the active material presented in this invention, swelling of the electrode is prevented and thereby the charging-discharging characteristics is improved and the capacity of a cell increases.

### BRIEF DESCRIPTION OF THE DRAWINGS

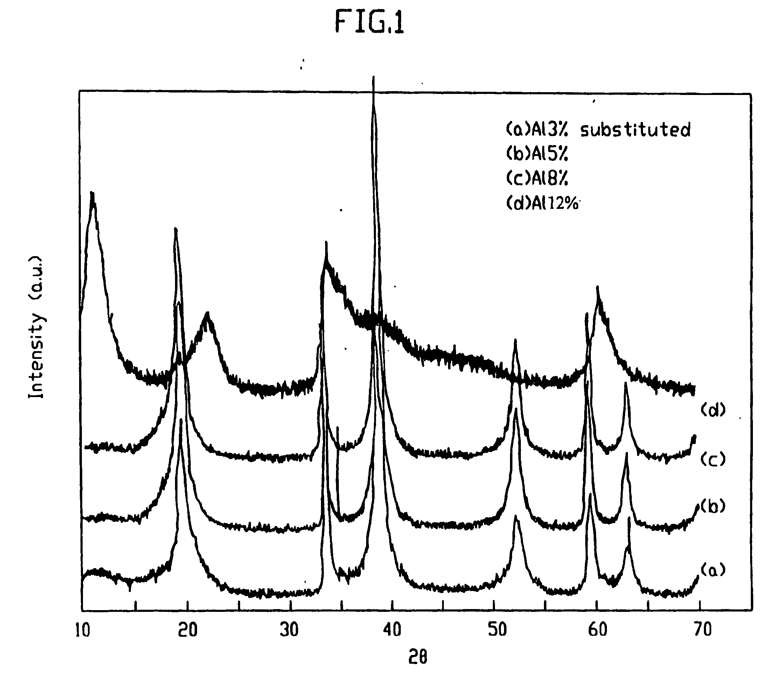

FIG. 1 is a graph showing a XRD pattern with the content of substituted Al⁺³ of an active material for a cathode of the nickel cell produced by the method presented in this invention.

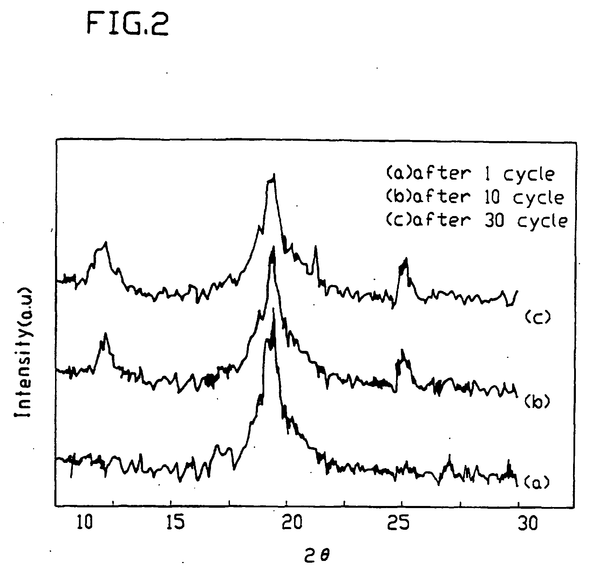

FIG. 2 is a graph showing a XRD pattern indicating the form transition occurring for a charging-discharging reaction in the nickel cell produced by the method presented in this invention.

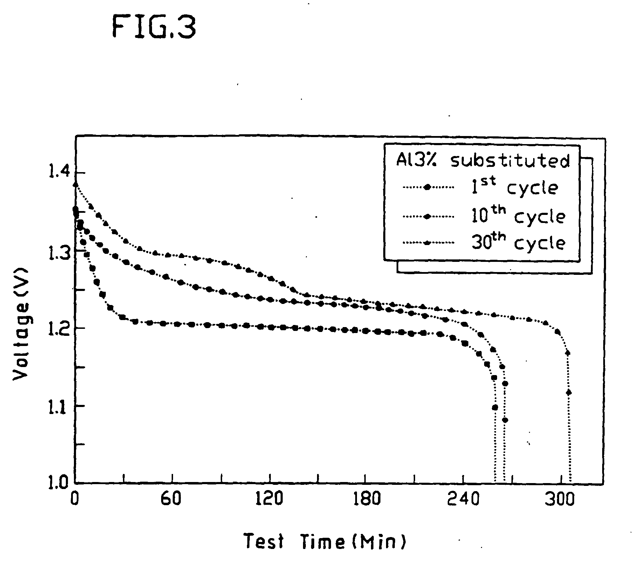

FIG. 3 is a graph showing the charging-discharging characteristics of the powder of the active material for a cathode of the nickel cell produced by the method presented in this invention, in particular, substituted by Al⁺³.

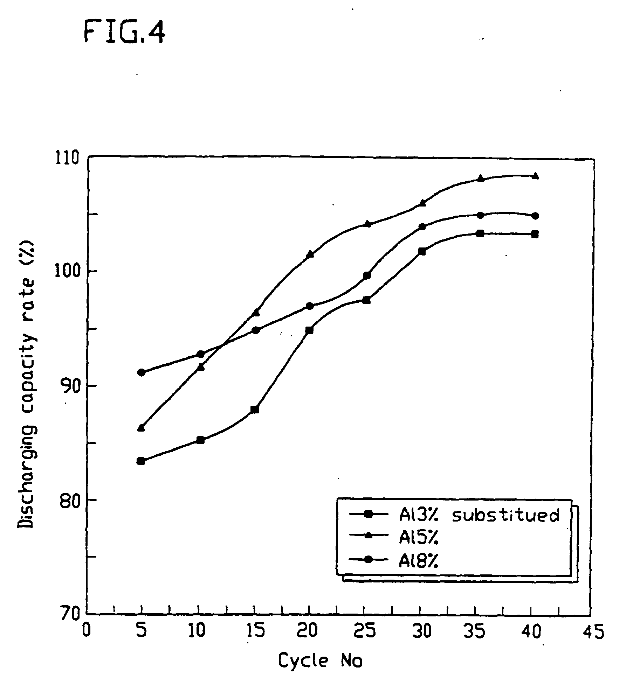

FIG. 4 is a graph showing the change of discharging capacity with the number of charging-discharging cycles and with the content of substituted Al⁺³ of the cell produced using the active material for a cathode of the nickel cell presented in this invention.

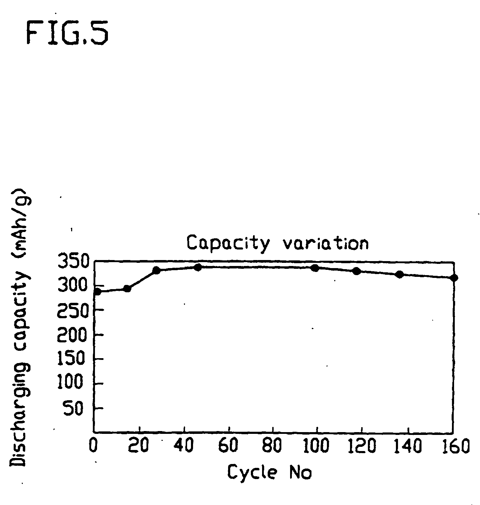

FIG. 5 is a graph showing the change of discharging capacity with the number of a charging-discharging cycle of the cell produced using the active material for a cathode of the nickel cell presented in this invention.

### DETAILED DESCRIPTION OF THE EMBODIMENTS

The present invention is further explained in more detail with reference to the following examples which do not limit this invention.

### EXAMPLE 1∼3

2.5% by mole nickel sulfate solution and 15.3 % by mole ammonia solution were mixed previously in a mixing container with the molar ratio of nickel to ammonia of 1 to 0.5∼1.0 and thereafter the mixed solution was provided directly and continuously in a reaction container.

The solution containing 0.01∼10% by mole Al⁺³ ions and 6% by mole NaOH solution with the molar ratio of nickel provided in the reaction container to NaOH solution of 1 to 1.5~2.5 and H₂CO₃ solution with the molar ratio of Al⁺³ provided to H₂CO₃ of 1 to more than 0.5 were provided continuously. The solutions were provided using constant-velocity circulatory pumps and one of them was connected to a pH controller. The reaction container was a 5*l* beaker excreting continuously and was agitated at 900rpm by a DC motor. For sufficient agitation of the solution and efficient excretion of precipitates, two impellers and a tubular-type baffle were equipped and a disc-type baffle was equipped in the upper zone. The reaction container was maintained at a constant temperature using a thermostat and was equipped with the pH electrode in the middle zone to control the pH and the velocity of the precipitation agent was automatically adjusted and thereby a constant pH was maintained.

Excreted solution was filtered in a suction filter and therein was sufficiently washed with distilled water to prevent precipitation in the upper zone.

The solutions were provided with a FMI piston pump and a 3∼180rpm constant-velocity motor and providing velocity of them were controlled within the range of 3.0m/ aberration or less per hour.

The produced nickel-metal hydroxycarbonate powder was differentiated by particle size by sieving in 200, 325, 400 mesh (75, 46, 32µm) and sample A, in example 1, was 46-75 µm, sample B, in example 2, was 32-46 µm, and sample C, in example 3, was less than 32µm of size. Thereafter properties were analyzed by shape, size, distribution, tapping density, thermal analysis, and form analysis of particles and the results are shown in table 1 below.

**Table 1 Properties and charging-discharging characteristics with particle size after 10 cycles**

| | example 1 | example 2 | example 3 |
|---|---|---|---|
| particle size[µm] | 46~75 | 32~46 | <32 |
| average particle size[µm] | 54 | 38 | 12 |
| specific surface area[m²/g] | 15 | 23 | 36 |
| tapping density[g/m²] | 1.84 | 1.98 | 2.13 |
| half width[001] | 2.3 | 2.3 | 2.3 |
| CoO content[%] | 12 | 12 | 12 |
| packing density[g/m³] | 1.65 | 1.73 | 1.96 |
| availability[%] | 108 | 112 | 123 |
| capacity[mAh/g] | 312 | 324 | 355 |

### EXAMPLE 4-6

An active material, sample A produced by the method presented example 1∼3 described above, 0.1~1.0% by weight of the weight of the active material of hydroxypropyl methylcellulose and polytetrafluoroethylene as a viscosity-increasing agent, and CoO, as a conductive agent, of which the content was varied, as shown in table 2 below, and added to produce paste and a cathode plate was made by the paste being laminated and packed in a nickel-foam plate and ABs-type hydrogenated alloy made from Mm metal(manufactured by Ovonic Battery Company) was used as a conjugate electrode or an anode.

Subsequently, the respective electrode was wholly separated by a separator. Electrolytic solution was injected and the separator was soaked in an electrolytic solution but the electrode was prevented from being soaked directly in the electrolytic solution and thereby a cell was produced.

### EXAMPLE 7∼9

Example 4-6 were repeated except that the active material, sample B were used.

### EXAMPLE 10~12

Example 4∼6 were repeated except that the active material, sample C were used.

The efficiency of the conductive agent with the content of it was measured and the results are shown in table 2 below.

### Table 2

The availability of the active material in charging-discharging cycles with the content of the conductive agent(CoO)

| sample | example | CoO content [weight%] | 10 cycles [availability%] | 30 cycles [availability%] | 50 cycles [availability%] |
|---|---|---|---|---|---|
| | example 4 | 6 | 101 | 100 | 102 |
| A | example 5 | 12 | 108 | 107 | 108 |
| | example 6 | 18 | 103 | 103 | 102 |
| | example 7 | 6 | 102 | 102 | 103 |
| B | example 8 | 12 | 112 | 112 | 112 |
| | example 9 | 18 | 104 | 105 | 104 |
| | example 10 | 6 | 114 | 113 | 115 |
| C | example 11 | 12 | 123 | 121 | 122 |
| | example 12 | 18 | 112 | 110 | 111 |

In the experiments using Al⁺³ as a metallic atom, a form powder was obtained when the content of Al⁺³ was more than 10% by mole of the total mole of the active material and β form nickel hydroxide was obtained when the content of Al⁺³ was 10% by mole or less of the total mole of the active material.

Drawing 1 is the XRD results with the content of Al⁺³ and as shown there, it is known that β form nickel hydroxide is obtained when the content of Al⁺³ is 10% by mole or less. Like this, the result measuring lattice constant from XRD shows that the larger the content of Al⁺³, the larger the constant of C axis and the smaller the constant of A axis. It is supposed that the constant of C axis increases because the larger the content of Al⁺³ substituted, the larger the number of CO₃²⁻ ions intercalated.

### EXAMPLE 13

To measure the form transition of the active material on the electrode plate charging-discharging cycles having been proceeded, the cell produced with the method presented in example 4 ~ 6 was experimented on charging-discharging cycles and thereafter the intensities after 1 cycle, 10cycles, 30cycles were measured and the results are respectively shown in drawing 2(a), 2(b), 2(c).

As shown in drawing 2, form transition occurs after 10 cycles of charging-discharging. In this case, electrode's swelling, the loss of the active material, and the decrease of capacity due to the form transition are not observed. The reason of the results is supposed that substitution of trivalent Al⁺³ buffers abrupt deformation of lattice due to form transition because the interval of lattice has been previously arranged.

The charging-discharging curve during the form transition is shown in drawing 3. It is known from the result that α↔γ couples participate in the charging-discharging reaction. The charging curve consisting only of β-β couples simply shows a single plateau, but a charging-discharging reaction by *α-*γ couples causes charging curve with 2 plateaus. Also, discharging capacity increases as α-γ couples also participate in the charging-discharging reaction.

From this, it is supposed that the availability of an active material increase with the reaction occurring within the active material powder itself from the form transition.

The discharging capacity with the number of charging-discharging cycles is shown in drawing 4. Discharging capacity increases within the range of 40 cycles of charging-discharging reaction with the form transition.

The availability of the cell made of nickel hydroxide powder(manufactured by Tanaka Co. in Japan) used ordinarily as cell materials and the availability of the cell made of the powder presented in this invention are measured.

The result is that the availability of the former is 280mAh/g, 90% of the maximum value and abrupt decrease of capacity is observed by the loss of an active material in high-rate charging of 1C charging. But the availability of the latter is invariable in 1C charging compared with in 0.2C charging and abrupt decrease of capacity does not occur even after 100 cycles. The results measuring discharging capacity of the cell using the active material presented in this invention is shown in drawing 5.

## Claims

1. An active material for a cathode of a nickel cell, having the formula Ni₁₋₂ₓM₂ₓ(OH)₂(CO₃)ₓ (0<x<0.05), wherein said M is a trivalent metal, the average diameter of said active material is 8-20 µm, tapping density thereof is 1.6g/cm³ or more, lattice constant C axis thereof is 4-6 Angstrom, lattice constant A axis thereof is 2.5-2.7 Angstrom, the shape thereof is globular, said active material has form β before a charging or discharging reaction, β→α form transition occurs during the charging or discharging reaction, thereby α↔γ form transition occurs, and therefore discharging capacity of the cell increases.

2. The active material according to claim 1, wherein said M is selected from the group consisting of Al, Co, Fe, Ga, Mn, In and the mixtures thereof.

3. A method for producing the active material of in claim 1, comprising the steps of:
a) producing a mixture by mixing a 2.5% by mole nickel sulfate solution and a 15.3% by mole ammonia solution, wherein the molar ratio of nickel to ammonia is of 1 to 0.5-1.0;
b) adding a 0.01-10% by mole trivalent metal-containing solution and a carbonate solution simultaneously with a precipitating agent to the mixture of a), wherein the molar ratio of the trivalent metal ions to the carbonate is of 1 to more than 0.5 ;
c) agitating and filtering said mixture under decompressed condition; and
d) sieving the particles resulting from c) so as to separate them by size.

4. The method of claim 3, wherein said precipitation agent is a 6% by mole NaOH solution containing metal oxide, where the molar ratio of nickel provided in the reaction container to NaOH solution is of 1 to 1.5-2.5.

5. A method for producing a cathode of a nickel cell, comprising the steps of:
a) producing paste by mixing the active material of claim 1, a viscosity-increasing agent and a conductive agent;
b) laminating said paste on a metallic supporter; and
c) drying and pressing said metallic supporter.

6. The method of claim 5 wherein said conductive agent is selected from the group consisting of Co, CoO, and Co(OH)₂ and the content of said conductive agent is 5-18% by weight of the total weight of the active material.

## Patentansprüche

1. Ein aktives Material für eine Kathode einer Nickel-Zelle, die die Formel Ni₁₋₂ₓM₂ₓ(OH)₂(CO₃)ₓ (0<x<0,05) aufweist, worin M ein dreiwertiges Metall ist, der durchschnittliche Durchmesser des aktiven Materials 8-20 µm beträgt, die Stampfdichte davon 1,6 g/cm³ oder mehr ist, die Gitterkonstante der C-Achse davon 4-6 Angstrom ist, die Gitterkonstante der A-Achse davon 2,5-2,7 Angstrom ist, die Gestalt davon kugelförmig ist, wobei das aktive Material die Form β vor einer Aufladungs- oder Entladungsreaktion aufweist, wobei der Übergang der Form β→α während der Aufladungs- oder Entladungsreaktion auftritt, wodurch ein Übergang der Form α ↔ γ auftritt und sich deshalb die Entladungskapazität der Zelle erhöht.

2. Das aktive Material gemäß Anspruch 1, wobei M aus der Gruppe ausgewählt wird, die aus Al, Co, Fe, Ga, Mn, In und den Mischungen davon besteht.

3. Ein Verfahren für die Herstellung des aktiven Materials aus Anspruch 1, das die folgenden Schritte umfasst:
a) Herstellen einer Mischung durch Vermischen einer 2,5 Mol-%-igen Nickelsulfatlösung und einer 15,3 Mol-%-igen Ammoniaklösung, wobei das Molverhältnis von Nickel zu Ammoniak 1 zu 0,5-1,0 beträgt;
b) Zugeben einer 0,01-10 Mol-%-igen dreiwertiges Metallenthaltenden Lösung und einer Carbonatlösung gleichzeitig mit einem Fällungsmittel zu der Mischung aus a), wobei das Molverhältnis des dreiwertigen Metallions zu dem Carbonat 1 zu mehr als 0,5 beträgt;
c) Rühren und Filtrieren der Mischung unter einer Bedingung mit vermindertem Druck; und
d) Sieben der aus c) resultierenden Teilchen, um sie der Größe nach zu trennen.

4. Das Verfahren gemäß Anspruch 3, wobei das Fällungsmittel eine Metalloxid enthaltende 6 Mol-%-ige NaOH-Lösung ist, wobei das Molverhältnis von dem im Reaktionsgefäß bereitgestellten Nickel zu der NaOH-Lösung 1 zu 1,5-2,5 beträgt.

5. Ein Verfahren für die Herstellung einer Kathode einer Nickel-Zelle, das die folgenden Schritte umfasst:
a) Herstellen einer Paste durch Vermischen des aktiven Materials aus Anspruch 1, eines Viskositäts-steigernden Mittels und eines leitfähigen Mittels;
b) Laminieren eines metallischen Trägers mit der Paste; und
c) Trocknen und Pressen des metallischen Trägers.

6. Das Verfahren gemäß Anspruch 5, wobei das leitfähige Mittel aus der Gruppe ausgewählt wird, die aus Co, CoO und Co(OH)₂ besteht, und der Anteil des leitfähigen Mittels 5-18 Gew.-% des Gesamtgewichts des aktiven Materials beträgt.

## Revendications

1. Matériau actif destiné à une cathode d'un générateur électrochimique au nickel, possédant la formule Ni₁₋₂ₓM₂ₓ(OH)₂(CO₃)ₓ (0<x<0,05), dans lequel ledit M est un métal trivalent, le diamètre moyen dudit matériau actif est de 8 à 20 µm, la densité de tassement de celui-ci est de 1,6 g/cm³ ou plus, l'axe C des constantes de réseau de celui-ci est de 4 à 6 Angstrom, l'axe A des constantes de réseau de celui-ci est de 2,5 à 2,7 Angstrom, la forme de celui-ci est globulaire, ledit matériau actif possède une forme β avant une réaction de charge ou de décharge, une transition de la forme β → α se produit pendant la réaction de charge ou de décharge, une transition de la forme α ↔ γ se produit, et, par conséquent, la capacité de décharge du générateur électrochimique augmente.

2. Matériau actif selon la revendication 1, dans lequel ledit M est choisi dans le groupe consistant en Al, Co, Fe, Ga, Mn, In et des mélanges de ceux-ci.

3. Procédé de production du matériau actif selon la revendication 1, comprenant les étapes consistant à :
a) produire un mélange en mélangeant une solution à 2,5% en mole de sulfate de nickel et une solution à 15,3% en mole d'ammoniac, dans lequel le rapport molaire entre le nickel et l'ammoniac est de 1 à 0,5-1,0 ;
b) ajouter une solution contenant de 0,01 à 10% en mole d'un métal trivalent et une solution de carbonate simultanément avec un agent de précipitation au mélange de a), dans laquelle le rapport molaire entre les ions du métal trivalent et le carbonate est de 1 à plus de 0,5 ;
c) agiter et filtrer ledit mélange dans un état décompressé ; et
d) tamiser les particules résultant de c) de façon à les séparer selon leur taille.

4. Procédé selon la revendication 3, dans lequel ledit agent de précipitation est une solution à 6% en mole de NaOH contenant un oxyde métallique, dans laquelle le rapport molaire entre le nickel prévu dans le récipient de réaction et la solution de NaOH est de 1 à 1,5-2,5.

5. Procédé de production d'une cathode destinée à un générateur électrochimique au nickel, comprenant les étapes consistant à :
a) produire une pâte en mélangeant le matériau actif selon la revendication 1, un agent augmentant la viscosité et un agent conducteur ;
b) stratifier ladite pâte sur un support métallique ; et
c) sécher et presser ledit support métallique.

6. Procédé selon la revendication 5, dans lequel ledit agent conducteur est choisi dans le groupe consistant en Co, CoO, et Co(OH)₂ et la teneur dudit agent conducteur est de 5 à 18% en poids du poids total du matériau actif.
